# EUROPÄISCHE PATENTSCHRIFT

(11) **EP 1 440 247 B1**
(45) Veröffentlichungstag und Bekanntmachung des Hinweises auf die Patenterteilung: **21.12.2005**
(21) Anmeldenummer: 02772384.0
(22) Anmeldetag: 17.10.2002
(51) Int. Cl.: F16D 27/112, E05F 15/10

(54) **ELEKTROMAGNETISCHE REIBSCHLÜSSIGE SCHALTKUPPLUNG FÜR FAHRZEUGTÜR**
ELECTROMAGNETIC FRICTION CLUTCH FOR A VEHICLE DOOR
EMBRAYAGE A FRICTION ELECTROMAGNETIQUE POUR PORTE DE VEHICULE

(30) Priorität: 19.10.2001 DE 10152697
(43) Veröffentlichungstag der Anmeldung: 28.07.2004
(73) Patentinhaber: Valeo Sicherheitssysteme GmbH, 85253 Erdweg (DE)
(72) Erfinder: SCHACHTL, Stephan, 80805 MÜNCHEN (DE); HUMEZ, Thomas, 85221 DACHAU (DE)
(74) Vertreter: Rosolen-Delarue, Katell
(86) Internationale Anmeldenummer: PCT/EP2002/011637
(87) Internationale Veröffentlichungsnummer: WO 2003/036119

(56) Entgegenhaltungen:
- GB-A- 890 413
- US-A- 5 896 703
- PATENT ABSTRACTS OF JAPAN vol. 2000, no. 02, 29. Februar 2000 (2000-02-29) & JP 11 301271 A (OI SEISAKUSHO CO LTD;AICHI MACH IND CO LTD), 2. November 1999 (1999-11-02)

## Beschreibung

Die Erfindung betrifft eine elektromagnetische reibschlüssige Schaltkupplung zur Anordnung innerhalb eines einen Antriebsmotor und eine Fahrzeugtür oder Fahrzeugklappe (Heckklappe, Motorhaube etc.) verbindenden Antriebsstranges.

Bei Kraftfahrzeugen mit automatisch betätigbarer Fahrzeugtür oder Fahrzeugklappe (im folgenden auch zusammenfassend nur als Fahrzeugtür bezeichnet) wird beispielsweise vom Fahrer des Fahrzeuges durch eine entsprechende Betätigung eines in der Instrumententafel vorgesehenen Schalters die Fahrzeugtür geschlossen oder geöffnet. Hierzu wirkt das von dem Schalter erzeugte Schaltsignal auf eine elektronische Steuereinrichtung, die ihrerseits elektrische Steuersignale zur Aktivierung eines Elektromotors erzeugt, der dann seinerseits über ein nachgeschaltetes Getriebe und weiteren Übertragungselementen die Fahrzeugtür verschwenkt oder verschiebt.

Nachteilig ist bei diesen bekannten Kraftfahrzeugen unter anderem, dass bei einem manuellen Zudrücken der Fahrzeugtür aufgrund des mit der Fahrzeugtür in Wirkverbindung stehenden Getriebes bzw. Elektromotors ein hoher Widerstand zu überwinden ist und ein erhöhter Verschleiß dieser Bauteile auftritt.

Zur Vermeidung eines derartigen Verschleißes ist bereits eine automatisch betätigbare Fahrzeugtür vorgeschlagen worden, bei welcher der Motor bzw. das dem Motor nachgeschaltete Getriebe von der die Fahrzeugtür betätigenden Antriebswelle mittels einer elektromagnetischen Schaltkupplung entkuppelbar ist, so dass im ausgeschalteten Zustand der Schaltkupplung eine manuelle Betätigung der Fahrzeugtür möglich ist, ohne dass deren Bewegung durch die an der Antriebswelle der Kupplung angeordneten Baueinheiten (z. B. Elektromotor oder Zwischengetriebe) gehemmt wird.

Derartige elektromagnetische Schaltkupplungen sind in der Regel als reibschlüssige Schaltkupplungen ausgebildet und umfassen daher ein mit einem Reibbelag versehenes und mit einer ersten Welle drehfest verbundenes Rotorteil, an dem auf seiner dem Reibbelag abgewandten Seite eine elektrische Spule angeordnet ist, und eine drehfest, aber axial verschiebbar mit einer zweiten Welle verbundene Ankerscheibe, die im eingeschalteten Zustand der Schaltkupplung gegen den Reibbelag des Rotorteiles der ersten Welle gezogen wird und eine reibschlüssige Verbindung zwischen den beiden Wellen herstellt. Im abgeschalteten Zustand der Schaltkupplung werden die Ankerscheibe und das Rotorteil mittels einer Feder auseinandergedrückt, so dass zwischen Ankerscheibe und Reibbelag ein genau vorgegebener spaltförmiger Abstand besteht.

Es ist mit der Dokument US 5896703 ein solche Vorrichtung gekannt.

Die vorstehend erwähnten Fahrzeugtüren weisen allerdings den Nachteil auf, dass im nicht bestromten Fall aufgrund der offenen Kupplung die Fahrzeugtür leicht beweglich und häufig unkontrolliert den auf sie wirkenden Kräften (Schwerkraft, Federn der Aufhängung, Dämpfern etc.) ausgesetzt ist, wenn sie sich in einer zwischen der geschlossenen und der geöffneten Stellung befindlichen Zwischenstellung befindet. Heckklappen werden bei Vorhandensein einer entsprechend starken Feder nach dem Öffnen der Kupplung in der Regel aus der Zwischenstellung in die geöffnete Endlage verschwenkt, obwohl die Fahrzeugtür aus Sicherheitsgründen häufig in der jeweiligen Zwischenposition stehen bleiben soll.

Der Erfindung liegt die Aufgabe zugrunde, eine Schaltkupplung der eingangs erwähnten Art anzugeben, mittels welcher auf einfache Weise erreicht wird, dass die Fahrzeugtür in jeder Zwischenposition sicher gehalten wird, wenn sich die Schaltkupplung in ihrem ausgeschalteten Zustand befindet. Außerdem soll die Möglichkeit, eine manuelle Notbetätigung der Fahrzeugtür vornehmen zu können, erhalten bleiben.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, ein elastisches Element, z. B. eine Druckfeder, vorzusehen, welches die Ankerscheibe der Schaltkupplung in axialer Richtung beaufschlagt, derart, dass die Ankerscheibe im ausgeschalteten Zustand der Schaltkupplung mit einer Kraft gegen den Reibbelag des Rotorteiles gedrückt wird, die groß genug ist, damit die Fahrzeugtür in der jeweiligen beim Ausschalten der Schaltkupplung eingenommenen Position sicher stehen bleibt und dass bei einer anschließenden manuellen Betätigung der Fahrzeugtür der Reibschluss zwischen Ankerscheibe und Reibbelag überwindbar ist.

Die Erfindung weist den Vorteil auf, dass die bei Verwendung herkömmlicher Schaltkupplungen relativ aufwendige Spaltmaßeinstellung vollständig entfällt. Außerdem kann die Kupplung aufgrund der Vorbelastung mittels der Feder im eingeschalteten Zustand ein höheres Drehmoment übertragen als eine vergleichbare Kupplung ohne Vorbelastung.

Bei einer ersten Ausführungsform der Erfindung ist die zweite Welle außenseitig drehfest mit einem Mitnehmerteil verbunden, welches axiale Führungsteile umfasst, die in entsprechende nutenförmige Ausnehmungen der Ankerscheibe eingreifen. Vorteilhafterweise kann der Mitnehmer auch mindestens eine auf der der Ankerscheibe zugewandten Seite offene Sacklochbohrung zur Aufnahme der als elastisches Element verwendeten Druckfeder aufweisen.

Um eine platzsparende Anordnung der Schaltkupplung zu erreichen, ist bei einer zweiten Ausführungsform der Erfindung vorgesehen, eine der beiden Wellen als Hohlwelle auszubilden, in welche die jeweils andere Welle mindestens teilweise hineinragt und von der diese Welle dann radial geführt wird. Dabei kann die als Hohlwelle ausgebildete Welle außenseitig ein Zahn- oder Schneckenrad tragen, welches über Antriebselemente mit dem Antriebsmotor in Wirkverbindung steht.

Bei einer weiteren Ausführungsform der Erfindung ist vorgesehen, dass das die Schaltkupplung umfassende Gehäuse derart ausgebildet ist, dass es zusätzlich sowohl eine der Schaltkupplung nachgeschaltete Getriebestufe zum Antrieb eines die Fahrzeugtür betätigenden Antriebshebels als auch eine der Schaltkupplung vorgeschaltete Getriebestufe umfasst, über welche die Schaltkupplung mit dem an dem Gehäuse angeflanschten Antriebsmotor verbunden ist. Durch diese Maßnahme ist es auf einfache Weise möglich, den gesamten Antrieb zur Betätigung der Fahrzeugtür als vorfertigbares Modul aufzubauen.

Zur Anpassung der erfindungsgemäßen Schaltkupplung an unterschiedliche Kraftfahrzeuge bzw. Fahrzeugtypen ist häufig lediglich ein Austausch der Feder erforderlich, welche die Ankerscheibe gegen den Reibbelag drückt.

Weitere Einzelheiten und Vorteile der Erfindung ergeben sich aus den folgenden anhand von Figuren erläuterten Ausführungsbeispielen. Es zeigen:
Fig. 1 eine teilweise im Schnitt dargestellte schematische Seitenansicht einer Antriebseinheit für eine automatische Fahrzeugtür mit erfindungsgemässer Schaltkupplung und

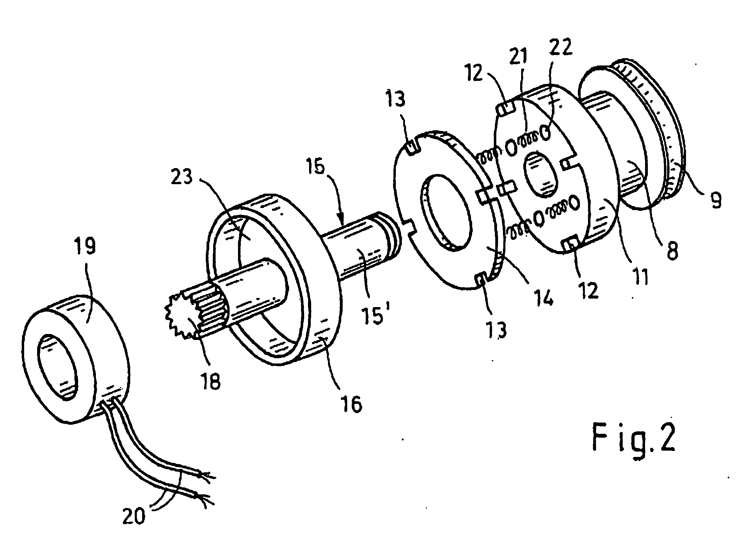

Fig. 2 eine Explosionsdarstellung der in Fig. 1 wiedergegebenen Schaltkupplung, wobei die Einzelteile der Kupplung perspektivisch dargestellt sind.

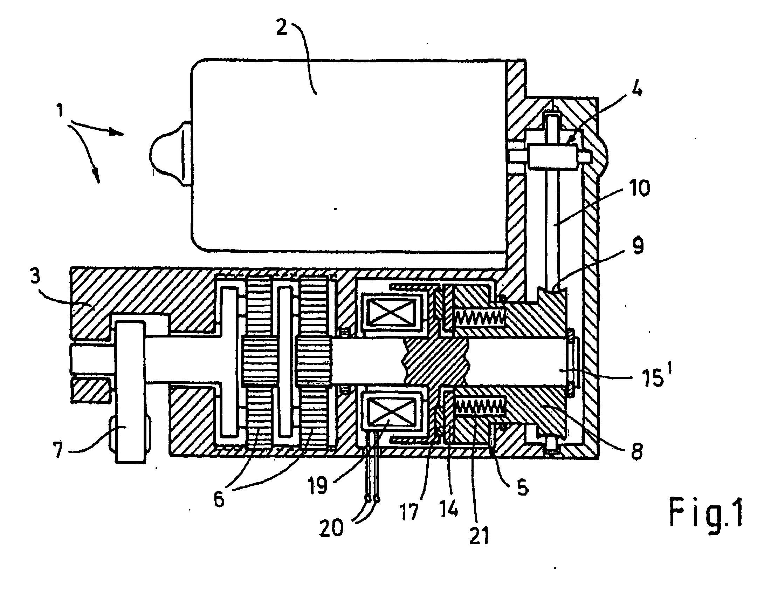

In Fig. 1 ist mit 1 eine Antriebseinheit zum automatischen Betätigen einer nicht dargestellten Heckklappe eines Kraftfahrzeuges bezeichnet. Die Antriebseinheit 1 umfasst einen Elektromotor 2, der an einem Gehäuse 3 angeflanscht ist. Der Elektromotor 2 ist über ein in dem Gehäuse 3 angeordnetes Schneckengetriebe 4 und über eine erfindungsgemäße elektromagnetische reibschlüssige Schaltkupplung 5 mit einem zweistufigen Planetengetriebe 6 verbunden, welches auf einen verschwenkbaren Antriebshebel 7 wirkt. Der Antriebshebel 7 ist drehfest mit einem nicht dargestellten Schamierbügel der Heckklappe verbunden und bewirkt deren Schließen, sofern der Elektromotor 2 bestromt wird und die Schaltkupplung 5 geschlossen ist.

Die Schaltkupplung 5 umfasst eine Hohlwelle 8, welche im Bereich ihres ersten Endes mit einem Schneckenrad 9 versehen ist, in welche die Schnecke 10 des Schneckengetriebes 4 eingreift. Im Bereich ihres zweiten Endes trägt die Hohlwelle 8 ein Mitnehmerteil 11, an dem vier sich in axialer Richtung erstreckende Führungsteile 12 angeordnet sind. Diese Führungsteile 12 greifen in entsprechende Ausnehmungen 13 einer axial verschiebbaren, aber drehfest mit der Hohlwelle 8 verbundenen Ankerscheibe 14 ein.

Die Schaltkupplung 5 umfasst ferner eine Welle 15, die ein drehfest mit ihr verbundenes tassenförmiges Rotorteil 16 trägt, welches auf seinem der Ankerscheibe 14 zugewandten Ende einen Reibbelag 17 aufweist. Der vor dem Rotorteil 16 liegende Bereich 15' der Welle 15 ist durch die Hohlwelle 8 hindurchgeführt und wird von dieser radial geführt. Auf dem gegenüberliegenden Ende der Welle 15 ist ein Zahnrad 18 drehfest angeordnet, welches mit dem Planetengetriebe 6 zusammenwirkt.

Auf der dem Reibbelag 17 abgewandten Seite des tassenförmigen Rotorteiles 16 befindet sich in einer Ausnehmung 23 eine gehäusefest angeordnete Spule 19, deren elektrische Anschlüsse mit 20 bezeichnet sind.

Erfindungsgemäß ist nun vorgesehen, dass die Ankerscheibe 14 ständig mittels Druckfedern 21, die in entsprechenden Sacklochbohrungen 22 des Mitnehmerteiles 11 bzw. der Hohlwelle 8 gelagert sind, gegen den Reibbelag 17 gedrückt wird. Dabei sind die Federkonstanten der Druckfedern 21 so groß gewählt, dass die Ankerscheibe 14 im ausgeschalteten Zustand der Schaltkupplung 5 mit einer Kraft gegen den Reibbelag 17 des Rotorteiles 16 gedrückt wird, die groß genug ist, damit die Heckklappe in der jeweiligen beim Ausschalten der Schaltkupplung 5 eingenommenen Position sicher stehen bleibt und dass bei einer anschließenden manuellen Betätigung der Heckklappe der Reibschluss zwischen Ankerscheibe 14 und Reibbelag 17 überwindbar ist, so dass bei der manuellen Notbetätigung keine nennenswerte Belastung und damit auch kein nennenswerter Verschleiß des Schneckengetriebes 4 bzw. Elektromotors 2 auftritt.

Die Erfindung ist selbstverständlich nicht auf das vorstehend beschriebene Ausführungsbeispiel beschränkt. So braucht beispielsweise die elektrische Spule 19 nicht zwingend gehäusefest angeordnet sein. Vielmehr kann sie auch drehfest mit dem Rotorteil 16 verbunden sein, sofern ihre Anschlüsse 20 mit entsprechenden, an dem dem Rotorteil 16 oder der Welle 15 angeordneten Schleifringen verbunden sind.

Bei den Druckfedern 21 kann es sich beispielsweise auch um Gasfedem oder andere elastische Teile handeln.

Außerdem muss die das Rotorteil tragende Welle nicht zwingend in einer Hohlwelle gelagert sein, sondern bei entsprechender Lagerung können die beiden Wellen der Schaltkupplung auch axial hintereinander angeordnet sein und z. B. aus einem Vollmaterial bestehen.

### Bezugszeichenliste

- 1: Antriebseinheit
- 2: Elektromotor, Antriebsmotor
- 3: Gehäuse
- 4: Schneckengetriebe, Getriebestufe
- 5: Schaltkupplung
- 6: Planetengetriebe, Getriebestufe
- 7: Antriebshebel
- 8: Hohlwelle, zweite Welle
- 9: Schneckenrad
- 10: Schnecke
- 11: Mitnehmerteil
- 12: Führungsteil
- 13: Ausnehmung
- 14: Ankerscheibe
- 15: Welle, erste Welle
- 15': Bereich
- 16: Rotorteil
- 17: Reibbelag
- 18: Zahnrad
- 19: Spule
- 20: Anschluss
- 21: Druckfeder, elastisches Element
- 22: Sacklochbohrung
- 23: Ausnehmung (Rotorteil)

## Patentansprüche

1. Elektromagnetische reibschlüssige Schaltkupplung für eine Fahrzeugtür oder eine Fahrzeugklappe, zur Anordnung innerhalb eines einen Antriebsmotor (2) und eine Fahrzeugtür oder eine Fahrzeugklappe verbindenden Antriebsstranges, umfassend eine Schaltkupplung (5), die in einem Gehäuse (3) angeordnet ist, und diese Schaltkupplung (5) umfasst ein mit einem Reibbelag (17) versehenes und mit einer ersten Welle (15) drehfest verbundenes Rotorteil (16), an dem auf seiner dem Reibbelag (17) abgewandten Seite eine elektrische Spule (19) angeordnet ist und eine drehfest, aber axial verschiebbar mit einer zweiten Welle (8) verbundene Ankerscheibe (14), die im eingeschalteten Zustand der Schaltkupplung (5) gegen den Reibbelag (17) des Rotorteiles (16) der ersten Welle (15) gezogen wird und eine reibschlüssige Verbindung zwischen den beiden Wellen (8, 15) herstellt;
**dadurch gekennzeichnet dass** die Ankerscheibe (14) in axialer Richtung durch mindestens ein elastisches Element (21) beaufschlagt ist, derart, dass die Ankerscheibe (14) im ausgeschalteten Zustand der Schaltkupplung (5) mit einer Kraft gegen den Reibbelag (17) des Rotorteiles (16) gedrückt wird, die in Betrieb groß genug ist, damit die Fahrzeugtür oder Fahrzeugklappe in der jeweiligen beim Ausschalten der Schaltkupplung (5) eingenommenen Position sicher stehen bleibt und dass bei einer anschließenden manuellen Betätigung der Fahrzeugtür oder Fahrzeugklappe der Reibschluss zwischen Ankerscheibe (14) und Reibbelag (17) überwindbar ist.

2. Schaltkupplung nach Anspruch 1, **dadurch gekennzeichnet, dass** es sich bei dem elastischen Element (21) um eine Druckfeder handelt.

3. Schaltkupplung nach Anspruch 1 oder 2, **dadurch gekennzeichnet, dass** die zweite Welle (8) außenseitig drehfest mit einem Mitnehmerteil (11) verbunden ist, welches axiale Führungsteile (12) umfasst, die in entsprechende nutenförmige Ausnehmungen (13) der Ankerscheibe (14) eingreifen.

4. Schaltkupplung nach Anspruch 3, **dadurch gekennzeichnet, dass** die zweite Welle (8) oder das Mitnehmerteil (11) mindestens eine auf der der Ankerscheibe (14) zugewandten Seite offene Sacklochbohrung (22) zur Aufnahme der Druckfeder (21) enthält.

5. Schaltkupplung nach einem der Ansprüche 1 bis 4, **dadurch gekennzeichnet, dass** eine der beiden Wellen (8, 15) als Hohlwelle (8) ausgebildet ist, in welche die jeweils andere Welle (15) mindestens teilweise hineinragt und von der diese Welle (15) radial geführt wird.

6. Schaltkupplung nach Anspruch 5, **dadurch gekennzeichnet, dass** die als Hohlwelle (8) ausgebildete Welle außenseitig ein Zahn- oder Schneckenrad (9) trägt, welches über Antriebselemente mit dem Antriebsmotor (2) in Wirkverbindung steht.

7. Schaltkupplung nach einem der Anspruche 1 bis 6, **dadurch gekennzeichnet, dass** das Rotorteil (16) auf seiner dem Reibbelag (17) abgewandten Seite eine Ausnehmung (23) aufweist, in welcher die Spule (19) mindestens teilweise angeordnet ist.

8. Schaltkupplung nach einem der Ansprüche 1 bis 7, **dadurch gekennzeichnet, dass** die Spule (19) gehäusefest gelagert ist.

9. Schaltkupplung nach einem der Ansprüche 1 bis 8, **dadurch gekennzeichnet, dass** die Schaltkupplung (5) in einem Gehäuse (3) angeordnet ist, welches außerdem mindestens eine der Schaltkupplung (5) nachgeschaltete Getriebestufe (6) zum Antrieb eines die Fahrzeugtür betätigenden Antriebshebels (7) als auch eine der Schaltkupplung (5) vorgeschaltete Getriebestufe (4) umfasst, über welche die Schaltkupplung (5) mit dem an dem Gehäuse (3) angeflanschten Antriebsmotor (2) verbunden ist.

## Claims

1. Electromagnetic friction clutch for a vehicle door or a vehicle access cover, for arrangement inside a driveline connecting a drive motor (2) and a vehicle door or a vehicle access cover, comprising a clutch (5), which is arranged in a housing (3), this clutch (5) comprising a rotor part (16), which is provided with a friction lining (17) and is rotationally locked to a first shaft (15), and on which an electrical coil (19) is arranged on its side remote from the friction lining (17), and an armature plate (14) which is rotationally locked to but axially displaceable on a second shaft (8) and which when the clutch (5) is energised is drawn against the friction lining (17) of the rotator part (16) on the first shaft (15), establishing a frictional connection between the two shafts (8, 15), **characterised in that** the armature plate (14) is acted upon in an axial direction by at least one elastic element (21), in such a way that when the clutch (5) is de-energised the armature plate (14) is pressed against friction lining (17) of the rotor part (16) with a force which in operation is sufficient to maintain the vehicle door or the vehicle access cover securely in the respective position assumed when the clutch (5) was de-energised, and that the frictional connection between the armature plate (14) and the friction lining (17) can be overcome on subsequent manual operation of the vehicle door or vehicle access cover.

2. Clutch according to Claim 1, **characterised in that** the elastic element (21) is a compression spring.

3. Clutch according to Claim 1 or 2, **characterised in that** externally the second shaft (8) is rotationally locked to a carrier part (11), which comprises axial guide parts (12), which mesh in corresponding groove-shaped recesses (13) in the armature plate (14).

4. Clutch according to Claim 3, **characterised in that** the second shaft (8) or the carrier part (11) contains at least one blind hole (22), open on the side facing the armature plate (14), for receiving the compression spring (21).

5. Clutch according to any one of Claims 1 to 4, **characterised in that** one of the two shafts (8, 15) takes the form of a hollow shaft (8), into which the other shaft (15) at least partially extends and which guides this shaft (15) radially.

6. Clutch according to Claim 5, **characterised in that** the shaft which takes the form of a hollow shaft (8) externally supports a gear wheel or worm wheel (9), which is operatively connected by way of drive elements to the drive motor (2).

7. Clutch according to any one of Claims 1 to 6, **characterised in that** the rotor part (16), on its side remote from the friction lining (17), has a recess (23), in which the coil (19) is at least partially arranged.

8. Clutch according to any one of Claims 1 to 7, **characterised in that** the coil (19) is supported by being fixed to the housing.

9. Clutch according to any one of Claims 1 to 8, **characterised in that** the clutch (5) is arranged in a housing (3), which in addition comprises at least one gear stage (6) connected to the output side of the clutch (5) for driving an actuating lever (7) operating the vehicle door, and a gear stage (4) connected to the input side of the clutch (5), by way of which the clutch (5) is connected to the drive motor (2), flange-mounted on the housing (3).

## Revendications

1. Embrayage électromagnétique à friction pour une portière ou un volet de véhicule, à positionner à l'intérieur d'une chaîne de transmission reliant un moteur d'entraînement (2) et une portière ou un volet de véhicule, comprenant un embrayage (5) qui est disposé dans un* logement (3) ; cet embrayage (5) comprend un rotor (16) qui est doté d'une garniture de friction (17) et est fixé à un premier arbre (15) et sur lequel, du côté tourné à l'opposé de la garniture de friction (17), est disposée une bobine électrique (19) et un disque d'induit (14) non tournant, mais mobile dans le sens axial et relié à un second arbre (8), lequel disque d'induit (14) est tiré contre la garniture de friction (17) du rotor (16) du premier arbre (15) lorsque l'embrayage (5) est activé et établit une liaison par friction entre les deux arbres (8, 15),
**caractérisé en ce que** le disque d'induit (14) est sollicité dans le sens axial par au moins un élément élastique (21) de façon telle que le disque d'induit (14), lorsque l'embrayage (5) est désactivé, est comprimé contre la garniture de friction (17) du rotor (16) avec une force suffisante pour que la portière ou le volet du véhicule soient maintenus de manière sûre dans la position qu'elle ou il ont adoptée au moment de la désactivation de l'émbrayage (5) et qu'en cas de manoeuvre manuelle ultérieure de la portière ou du volet du véhicule, l'adhérence par friction existant entre le disque d'induit (14) et la garniture de friction (15) soit surmontable.

2. Embrayage selon la revendication 1, **caractérisé en ce que** l'élément élastique (21) est un ressort de compression.

3. Embrayage selon les revendications 1 ou 2, **caractérisé en ce que** le second arbre (8) est relié à l'extérieur par un doigt d'entraînement non tournant (11) qui comprend des éléments de guidage axiaux (12) venant en prise dans des creux (13) en forme de gorge situés sur le disque d'induit (14).

4. Embrayage selon la revendication 3, **caractérisé en ce que** le second arbre (8) ou le doigt d'entraînement (11) contient au moins un trou borgne (22) ouvert du côté tourné vers le disque d'induit (14) et servant à recevoir le ressort à compression (21).

5. Embrayage selon l'une quelconque des revendications 1 à 4, **caractérisé en ce qu'**un des deux arbres (8, 15) est un arbre creux (8) dans lequel pénètre au moins en partie l'autre arbre (15) et qui est guidé dans le sens radial par cet arbre (15).

6. Embrayage selon la revendication 5, **caractérisé en ce que** l'arbre creux (8) porte à l'extérieur une roue dentée ou une roue à vis sans fin (9) qui est en liaison mécanique avec le moteur d'entraînement (2) par l'intermédiaire des éléments de transmission.

7. Embrayage selon l'une quelconque des revendications 1 à 6, **caractérisé en ce que** le rotor (16) présente sur son côté tourné à l'opposé de la garniture de friction (17) un creux (23) dans lequel est disposé au moins en partie la bobine (19).

8. Embrayage selon l'une des revendications 1 à 7, **caractérisé en ce que** la bobine (19) est solidaire du logement.

9. Embrayage selon l'une quelconque des revendications 1 à 8, **caractérisé en ce que** l'embrayage (5) est disposé dans un logement (3) qui contient de plus au moins un étage d'engrenage (6) situé en aval de l'embrayage (5) et servant à entraîner un levier d'entraînement (7) commandant la portière de véhicule, et aussi un étage d'engrenage (4) situé en amont de l'embrayage (5) et servant à relier l'embrayage (5) au moteur d'entraînement (2) bridé au logement (3).
